# EUROPEAN PATENT APPLICATION

(11) **EP 1 555 648 A2**
(43) Date of publication of application: **20.07.2005**
(21) Application number: 04030504.7
(22) Date of filing: 22.12.2004
(51) Int. Cl.: G09G 3/36

(54) **Display device and projection type display apparatus**

(30) Priority: 26.12.2003 JP 2003434448
(71) Applicant: SONY CORPORATION, Tokyo (JP)
(72) Inventor: Yoshinaga, Tomoro c/o SONY CORPORATION, Tokyo (JP); Hashimoto, Shunichi c/o SONY CORPORATION, Tokyo (JP); Akimoto, Osamu c/o SONY CORPORATION, Tokyo (JP); Kichimi, Tomoaki c/o SONY CORPORATION, Tokyo (JP)
(74) Representative: Müller - Hoffmann & Partner

(57) **Abstract**

A display device having extremely short writing time to a pixel such as the liquid crystal display device of a dot sequential drive method using a single-crystal silicon transistor as a switching element is provided in which in the case where a display area is divided into two or more areas, the degradation of picture quality is prevented to perform a high definition display.

In a display device of a matrix drive method in which gate lines X in the row direction and data lines Y in the column direction are arranged in matrix shape and a pixel P is arranged at the intersection of the gate line and the data line, a display area is divided into two or more areas 1A and 1B which are driven independently from each other; wiring layout of signal lines 8A and 8B which transfer display data d to each of the areas 1A and 1B is approximately symmetrical with a division boundary line of those areas positioned in between; and control unit 12 which makes a control to perform writing of the display data at least to the pixels P next to each other with the division boundary line positioned in between at approximately the same timing.

## Description

### BACKGROUND OF THE INVENTION

### Field of the Invention:

The present invention relates to a display device of a matrix-drive type and a projection type display apparatus (projector system) which employs such display device.

### Description of the Related Art:

Recently, projector systems which are miniaturized and have a higher definition and a higher intensity have been in great demand. In connection therewith, a display device which is used in a projector system is required to be small-sized and have a high definition, and also is required to have a high efficiency in use of light which comes from a light source.

One of the display devices which satisfy such demand is a reflective liquid crystal display device of the active matrix-drive method. This is the one in which liquid crystal is injected between a glass substrate on which a transparent electrode is formed and a drive circuit board. On the drive circuit board are arranged gate lines in the row direction and data lines in the column direction in matrix shape. A switching element, a pixel electrode which applies a voltage and reflects light to the liquid crystal, and an auxiliary capacitance are arranged at the intersection of a gate line and a data line.

When a gate line is scanned and display data (signal voltage) is supplied to a data line, a switching element is turned on at the intersection and the signal voltage is supplied to the pixel electrode. In other words, the signal voltage is written in a pixel. This signal voltage charges the auxiliary capacitance and is held in one frame period (for example, about 16.7 ms).

At this time, a potential difference occurs between the pixel electrode and the transparent electrode of the glass substrate, and voltage is applied to the liquid crystal. Optical properties of the liquid crystal change in response to this applied voltage, and passing-through light (light entering the glass substrate, light reflected by the transparent electrode to go out again from the glass substrate) is modulated. Accordingly, gradation display is performed.

Active matrix drive methods are classified into a line sequential drive method and a dot sequential drive method depending on the order of writing to each pixel. The line sequential drive method is a method in which display data are supplied to all data lines simultaneously in the period of scanning one gate line, so that writing is simultaneously performed in all the pixels on the gate line.

On the other hand, the dot sequential drive method is a method in which, in the state where one gate line has been scanned, display data is supplied with changing data lines by one column (or, by a plurality of adjacent columns) one after another, so that writing is performed on the pixels on the gate line one by one (or, on a plurality of adjacent pixels as a unit) and when reaching the data line of the last column, the gate line of the next row is scanned and the writing is repeated in the same way.

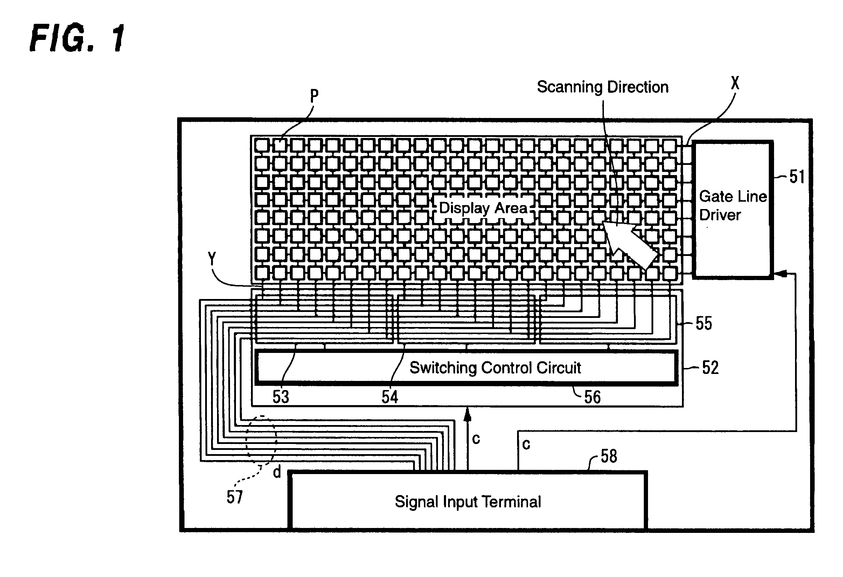

FIG. 1 shows on a drive circuit board a configuration of a liquid crystal display device of the dot sequential drive method in which adjacent eight pixels constitute a unit. Gate lines X in the row direction and data lines Y in the column direction are arranged in matrix shape and pixels P are each arranged at a position where the gate line intersects the data line.

Display data d which is output from a signal processing circuit (not illustrated) and which is input to a signal input terminal 58 is transferred by eight signal lines 57 to switches 53, 54 and 55 of a data line driver 52.

Further, a control signal c which is output from a timing control circuit (not illustrated) and which is input to the signal input terminal 58 is supplied to a gate line driver 51 and the data line driver 52.

A gate line driver 51 scans the gate line x based on this control signal c. In the data line driver 52, a switching control circuit controls the switches 53, 54 and 55 based on this control signal c.

In this display device, as shown with an arrow in the drawing, when the scanning of the gate line X is carried out in the direction from the bottom end to the upper end of the display area and the switching of the data line Y is carried out in the direction from the right end to the left end of the display area, the operation of a dot sequential drive is as follows.

First, with scanning the gate line X of the lowest row by the gate line driver 51, only the switch 55 is turned on by a switching control circuit 56 in the data line driver 52 to supply the display data d simultaneously to eight data lines Y on the right side. Accordingly, writing to the eight pixels on the right side of the lowest row is performed.

Then, with the gate line of the lowest row scanned, only the switch 54 is turned on by the switching control circuit 56 in the data line driver 52 to supply the display data d simultaneously to eight data lines Y in the center. Accordingly, writing to the eight pixels in the center of the lowest row is performed.

Subsequently, with the gate line of the lowest row scanned, only a switch 53 is turned on by the switching control circuit 56 in the data line driver 52 to supply the display data d simultaneously to eight data lines Y on the left side. Accordingly, writing to the eight pixels on the left side in the lowest row is performed.

In this way, when the writing to the pixel of the lowest row is completed, then, the gate line of the second row from the bottom is scanned to perform writing in the same order. Then, the gate line to be scanned is switched by one line in the upward direction, and the writing is repeated in the same order.

In the above described line sequential drive method and dot sequential drive method, since the display data must be simultaneously supplied to all data lines, the number and scale of the circuit in a display device or a peripheral circuit will become large in the line sequential drive method. On the other hand, in the dot sequential drive method the number and scale of those circuits can be made small. Therefore, in order to obtain a display device miniaturized, a dot sequential drive method is more advantageous.

On the other hand, in the dot sequential drive method, because the writing to all pixels must be completed in one frame by writing to each pixel one by one (or to a plurality of adjacent pixels as a unit), the time which can be spent on the writing to each pixel becomes short, and the drive frequency becomes high. In addition, it is required to increase the number of pixels for higher definition; however, when the number of pixels is increased, the writing time to each pixel must be further shortened and the drive frequency must be made still higher.

When the writing is concerned, there is a period of time at least necessary for writing to the pixel (the time to charge an auxiliary capacitance), and making drive frequency considerably high will cause increase in the burden of a circuit. Therefore, with the shortened time, there is a limit in the high definition.

Accordingly, as a method of increasing the number of pixels without shortening the writing time to each pixel, there exists a method in which the display area of a display device is divided into two or more areas which are driven independently. For example, if the display area is divided into two of upper and lower areas and those areas are independently driven from each other, the number of pixels can be increased twice without shortening the writing time to each pixel.

However, as for this division drive method, there is a problem of the degradation of the picture quality, because a division boundary line may become visible as a joint when difference of intensity and so on occur in those pixels, in the case where the writing timing to the pixels next to each other with the division boundary line of those display areas positioned in between becomes different.

Conventionally, a technology to avoid such degradation of the picture quality in the division drive method is disclosed, in which while dividing the display area of a display device into two or more in the up and down direction, the gate lines next to each other with the division boundary line of those display areas positioned in between are scanned at the same timing (For example, refer to Patent literature 1).

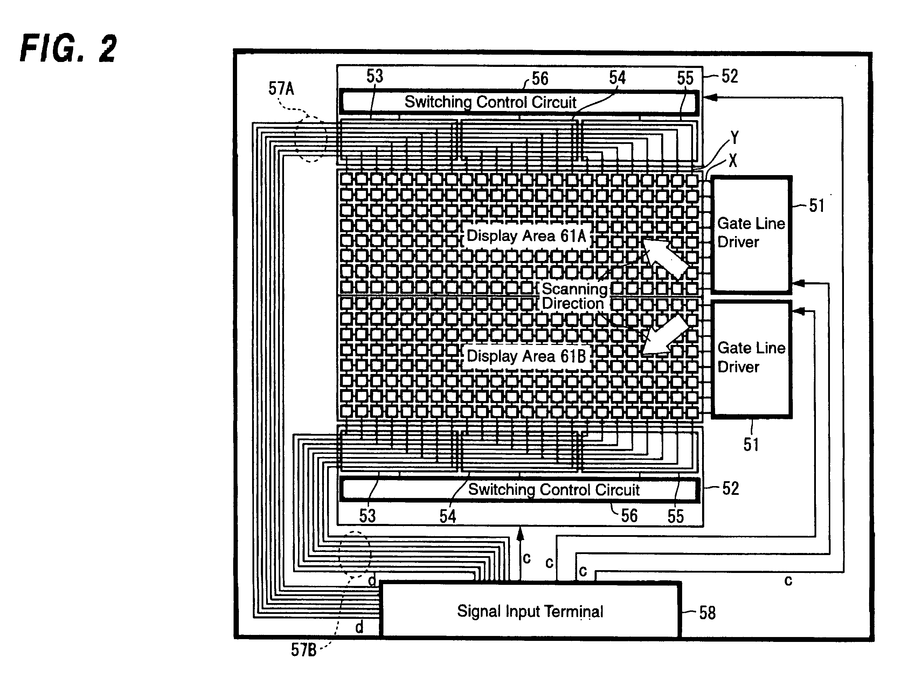

### [Patent literature 1] Japanese Published Paten Application No. H11-102172 (paragraph numbers 0118 to 0123, FIGS. 1 and 2)

However, this conventional technology is assumed to be applied to a liquid crystal display device of a line sequential drive method, in which an amorphous silicon transistor with the low electron mobility is mainly used as a switching element. In such liquid crystal display device, since the writing time to a pixel is a several microseconds, there is no influence in the voltage written in those pixels even if the timing at which the display data is supplied to the pixels next to each other with the division boundary line positioned in between becomes different to the extent of approximately 100 nsec (nanoseconds).

On the other hand, for example, in a liquid crystal display device of a dot sequential drive method in which a single-crystal silicon transistor with the high electron mobility is used as a switching element, the writing time to a pixel is an extremely short time of a several ten nanoseconds. Therefore, even if the gate lines next to each other with the division boundary line positioned in between are scanned at the same timing similarly to the conventional technology, the division boundary line will be visible as a joint, because the voltage written in those pixels is different when the timing at which the display data is supplied to the pixels next to each other with the division boundary line positioned in between becomes different to the extent of several ten nanoseconds.

Here, the liquid crystal display device of a dot sequential drive method shown in FIG. 2 is used as an example and a difference in the supply timing of such display data is considered. In this liquid crystal display device, a display area is divided into two upper and lower areas 61A and 61B in the column direction, and the same reference numerals as those in FIG. 1 are given to portions in common.

A gate line driver 51 and a data line driver 52 are individually provided for display areas 61A and 61B, respectively. Display data d for the display area 61A (the upper half of a screen), which is output from a signal processing circuit not illustrated and is input into a signal input terminal 58 located under the display area 61B, is transferred by eight signal lines 57A to switches 53, 54 and 55 in the data line driver 52 of the display area 61A.

Further, display data d for display area 61B (the lower half of a screen), which is output from a signal processing circuit and is input into a signal input terminal 58, is transferred by eight signal lines 57B to the switches 53, 54 and 55 in the data line driver 52 of the display area 61B.

Moreover, the control signal c which is output from a timing control circuit (not illustrated) and is input into a signal input terminal of this display device is supplied to the gate line driver 51 and the data line driver 52 of respective display areas 61A and 61B.

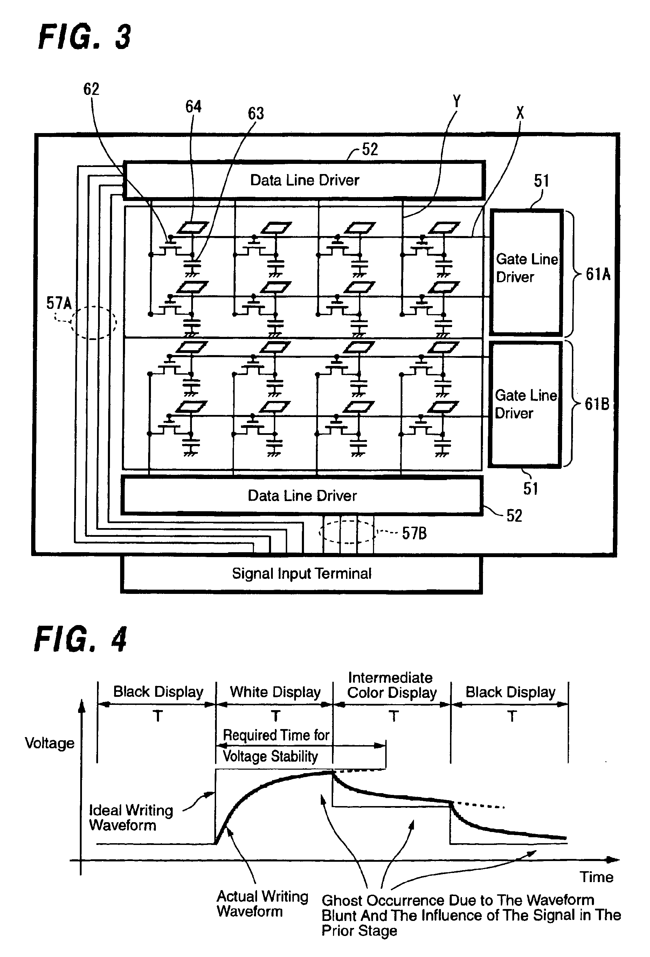

FIG. 3 shows an equivalent circuit with respect to part of pixels of this liquid crystal display device. A single-crystal silicon transistor 62 is connected to each intersection of the gate line X and data line Y as a switching element, and if the gate line X is scanned, this single-crystal silicon transistor 62 will be turned on. Then, when the display data d is supplied to the data line Y, an auxiliary capacitance 63 is charged through the single-crystal silicon transistor 62, and the voltage is applied to a liquid crystal 64.

In case the point sequential drive of this liquid crystal display device is carried out, as shown with arrows in FIG. 2 for example, with respect to the display area 61A the scanning of the gate line X is performed in the direction from the bottom end to the top end and the switching of the data line Y is performed in the direction from the right end to the left end; and with respect to the display area 61B the scanning of the gate line X is performed in the direction from the top end to the bottom end and the switching of the data line Y is performed in the direction from the right end to the left end. Then, the gate line X of the lowest row of the display area 61A and the gate line X of the highest row of the display area 61B (gate lines X next to each other with the division boundary line positioned in between) are scanned at the same timing.

Hereupon, for example, in the case where each of the display areas 61A and 61B has 1080 x 1920 pixels (height x width), respectively, and a refresh rate is set to 120Hz in this liquid crystal display device, writing time to each pixel becomes considerably short, that is, 24/ [(1920+) × (1080+) x 120] = approximately 80ns, even if adjacent twenty four pixels, for example, are made one unit instead of adjacent eight pixels. ( and are the share of the signal for the circuit control use.)

Therefore, when the difference of approximately several ten nanoseconds arises between the delay time with which the display data d input into the signal input terminal 58 is supplied to the pixel of the display area 61A, and the delay time with.which the display data d input into the signal input terminal 58 is supplied to the pixel of the display area 61B, the supply timing of the display data to the pixels next to each other with the division boundary line of the display areas 61A and 61B positioned in between becomes different by several ten nanoseconds, so that the voltage written in those pixels will be different.

FIG. 4 is a diagram showing an example in which a writing waveform to a pixel when the display data is delayed is compared with an ideal writing waveform, and each period T is the writing time to a pixel. A liquid crystal display device is a device driven by an analog voltage to perform display, and when the display data (analog data) is delayed, since the analog waveform written in a pixel will be blunt, the presumed voltage can not be written within the writing time.

Then, degree of the bluntness of this analog waveform changes depending on the length of the delay time. Therefore, even if the writing timing to a pixel of the display area 61A is simply shifted from the writing timing to a pixel of the display area 61B only by the difference of the delay time, the writing voltage to the pixel of the display area 61A and the writing voltage to the pixel of the display area 61B cannot be made equal.

Further, as also shown in FIG. 4, since the time required for stabilizing the writing voltage becomes long if the degree of the bluntness of the analog waveform becomes large due to the long delay time, the influence of the waveform written in the pixel of the prior stage (for example, in the liquid crystal display device of FIG. 2, pixels of the prior stage to the eight central pixels are the eight pixels on the right side) remains, so that a ghost occurs on a display screen and this also leads to the degradation of picture quality.

As described above, when a display area is divided into a plurality of areas in a display device with considerably a short writing time to a pixel such as a liquid crystal display device of a dot sequential drive method using a single-crystal silicon transistor as a switching element, the delay time until the display data is supplied to pixels of each display area causes the degradation of picture quality.

In view of the above-mentioned problems, the present invention is made in which degradation of picture quality can be prevented to perform a high definition display even in the case where a display area is divided into a plurality of areas in a display device with considerably a short writing time to a pixel such as a liquid crystal display device of a dot sequential drive method using a single-crystal silicon transistor as a switching element.

With respect to the above subject, as a result of repeating various experiments and studying thereof, the factors by which the display data is delayed are discovered. That is, a wiring resistance and parasitic capacitance of the signal line (signal lines 57A and 57B in FIG. 2) which transfers the display data to a data line driver, a wiring resistance and parasitic capacitance of the data line, and a wiring resistance and parasitic capacitance of the gate line are considered to be the factors, and among those factors it was found that the difference of delay time until the display data is supplied to the pixel of each divided display area was mainly caused by the difference of a wiring resistance and parasitic capacitance of the signal line which transfers the display data to a data line driver of each display area.

For example, in the liquid crystal display device shown in FIG. 2, since the signal line 57A is longer than the signal line 57B, a wiring resistance and parasitic capacitance become large, and therefore if the delay time in the signal line 57B is approximately 40ns, the delay time in the signal line 57A is approximately 100ns, and the difference of the delay time of several 10ns will arise.

### SUMMARY OF THE INVENTION

The present invention is a display device of a matrix drive method in which gate lines in the row direction and data lines in the column direction are arranged in matrix shape and a pixel is arranged at each intersection of the gate line and the data line, includes: a display area divided into two or more areas which are independently driven from each other; signal lines that transfer the display data to each area, whose wiring layout is approximately symmetrical at least with a division boundary line of those display areas positioned in between; and control portion which makes a control to perform writing of the display data to at least the pixels next to each other with the division boundary line of those display areas positioned in between at approximately the same timing.

According to this display device, the display area is divided into two or more areas which are driven independently from each other, and the wiring layout of the signal lines which transfer the display data to each area is approximately symmetrical with the division boundary line of those display areas positioned in between.

Thus, since the wiring layout of the signal lines which transfer the display data to each divided display area is made symmetrical with the division boundary line of those display areas positioned in between, the wiring resistance and parasitic capacitance of those signal lines become approximately equal, so that the delay time until the display data is supplied to the pixel of each display area becomes approximately equal (almost no difference occurs in the delay time).

Further, according to this display device, the control portion makes a control to perform writing of the display data to at least the pixels next to each other with the division boundary line positioned in between at approximately the same timing. Accordingly, approximately the same voltage is written in the pixels next to each other with the division boundary line positioned in between, with approximately the same writing waveform at the timing delayed from the timing of the control portion only by an approximately equal time in the signal lines (that is at almost the same timing).

Accordingly, since the difference in intensity and so on are not generated in the pixels next to each other with the division boundary line positioned in between, the division boundary line becomes invisible as a joint, so that picture quality can be improved.

Note that, as an example, it is preferable to divide a display area into four areas in this display device by dividing the display area into two in the column direction and also dividing the display area into two in the row direction.

With this, the length of the gate line of each display area becomes half by dividing the display area into two not only in the column direction but also in the row direction, so that the wiring resistance and parasitic capacitance of the gate line can also be made small. Accordingly, since the delay of the scanning timing (the delay of the timing when a switching element of each pixel on the gate line is turned on) caused by the wiring resistance and parasitic capacitance of the gate line can be decreased, the deterioration of the picture quality which is caused by this delay of scanning timing can also be prevented.

Next, the present invention is a projection type display apparatus in which an optical modulation device is irradiated with light from a light source to project light modulated by the optical modulation device in accordance with the display data, wherein this optical modulation device is a display device of a matrix drive method in which gate lines in the row direction and data lines in the column direction are arranged in matrix shape and a pixel is arranged at each intersection of the gate line and the data line and includes: a display area divided into two or more areas which are independently driven from each other; signal lines that transfer the display data to each area, whose wiring layout is approximately symmetrical at least with a division boundary line of those display areas positioned in between; and control portion which makes a control to perform writing of the display data to at least the pixels next to each other with the division boundary line positioned in between at approximately the same timing.

This projection type display apparatus uses the above described display device according to the present invention as an optical modulation device, and since the division boundary line of each display area of an optical modulation device becomes invisible as a joint on a projection screen, a large screen display with the high picture quality is attained.

According to the present invention, in the display device of the matrix drive method when a display area is divided into two or more areas and those areas are driven independently from each other, the difference in intensity and so on are not generated in the pixels next to each other with the division boundary line of respective display areas positioned in between, so that the division boundary line becomes invisible as a joint and the picture quality can be improved.

Moreover, since a display area is divided into two not only in the column direction but also in the row direction, the delay of the scanning timing caused by a wiring resistance and parasitic capacitance of the gate line is decreased, so that the degradation of the picture quality caused by the delay of this scanning timing can also be prevented.

### BRIEF DESCRIPTION OF THE DRAWINGS

FIG. 1 is a diagram showing an example of a configuration of a liquid crystal display device of a dot sequential drive method;
FIG. 2 is a diagram showing an example of a configuration of a liquid crystal display device of a dot sequential drive method in which a display area is divided into two;
FIG. 3 is a diagram showing an equivalent circuit of a liquid crystal display device of FIG. 2;
FIG. 4 is a diagram showing an example of a writing waveform to a pixel with the delay of the data line;
FIG. 5 is a diagram showing an example of a configuration of a liquid crystal display device to which the present invention is applied;
FIG. 6 is a diagram showing an equivalent circuit of a liquid crystal display device of FIG. 5;
FIG. 7 is a diagram showing an example of a writing waveform to a pixel with the delay of the signal line of FIG. 5;
FIGS. 8A to 8C are diagrams showing examples of change of the drive direction of a liquid crystal display device of FIG. 5;
FIG. 9 is a diagram showing a liquid crystal display device to which the present invention is applied;
FIG. 10 is a diagram showing an equivalent circuit of a liquid crystal display device of FIG. 9;
FIGS. 11A to 11C are diagrams showing examples of change of the drive direction of a liquid crystal display device of FIG. 9; and
FIG. 12 is a diagram showing an example of a configuration of a liquid crystal projector to which the present invention is applied.

### DESCRIPTION OF THE PREFERRED EMBODIMENTS

Hereinafter, embodiments in which the present invention is applied to a liquid crystal display device of a dot sequential drive method are specifically explained with reference to the drawings.

### [Embodiment 1]

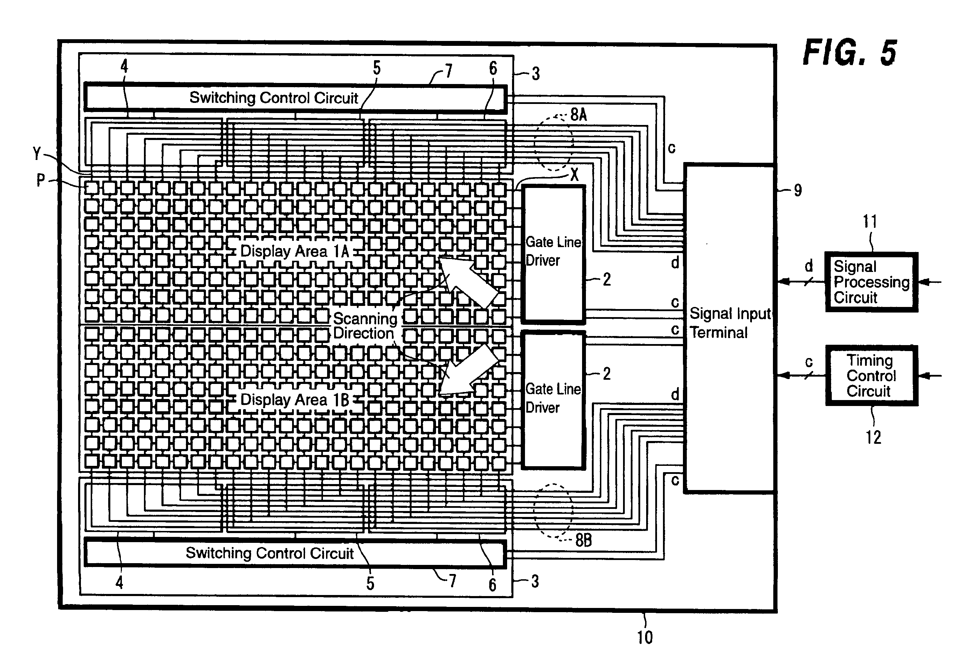

FIG. 5 shows an example of a configuration of a liquid crystal display device of a dot sequential drive method to which the present invention is applied. This liquid crystal device is a reflective liquid crystal display device in which the liquid crystal is injected between a glass substrate on which the transparent electrode is formed and a drive circuit board (a silicon substrate, for example), and the configuration on the side of the drive circuit board is shown in the figure. A display area on a drive circuit board 10 is divided into two areas 1A and 1B of the top and bottom in the column direction (vertical direction in the drawing).

Gate lines X in the row direction (horizontal direction in the drawing) and data lines Y in the column direction are arranged in each of areas 1A and 1B in the shape of matrix, respectively. A pixel electrode (a metal mainly composed of aluminum, for example) which applies the voltage and reflects light to a liquid crystal, a single-crystal silicon transistor as a switching element and an auxiliary capacitance are arranged at each intersection of the gate line X and data line Y (those pixel electrode, switching element, auxiliary capacitance, and a liquid crystal are included to be shown as a pixel P in the drawing).

A gate line driver 2 and a data line driver 3 are provided for each of the display areas 1A and 1B, respectively.

A signal processing circuit 11 is a circuit which performs processing of serial-parallel conversion, gamma correction, amplification and so on and which outputs the display data d for the display area 1A (for the upper half of the screen) and the display data d for the display area 1B (for the bottom half of the screen). Those display data d are analog data of eight phases for writing at the same time into eight pixels next to each other, respectively.

A timing control circuit 12 is a circuit which outputs a control signal c to the gate line driver 2 and data line driver 3 based on a synchronous signal input from the outside.

A signal input terminal 9 is provided on the right side of the display areas 1A and 1B in the drive circuit board 10. The display data d for respective display areas 1A and 1B from the signal processing circuit 11, and the control signal c from the timing control circuit 12 are input to the signal input terminal 9. Note that, although the display data d is analog data as mentioned above, a D/A converter which converts analog data to digital data may be provided in the drive circuit board 10, in the case where the digital data is input into the signal input terminal 9.

The display data d for the display area 1A which is input to the signal input terminal 9 from the signal processing circuit 11 is transferred to switches 4, 5 and 6 in the data line driver 3 of the display area 1A by eight signal lines 8A.

Further, the display data d for the display area 1B which is input to the signal input terminal 9 from the signal processing circuit 11 is transferred to the switches 4, 5 and 6 in the data line driver 3 of the display area 1B by eight signal lines 8B.

With respect to signal lines 8A and signal lines 8B, the wiring layout is symmetrical with a division boundary line (horizontal line) of the display area 1A and display area 1B positioned in between, as shown in the drawing.

The control signal c input into the signal input terminal 9 from the timing control circuit 12 is supplied to the gate line driver 2 and the data line driver 3 of respective display areas 1A and 1B.

The gate line drivers 2 of the display areas 1A and 1B scan the gate line X based on this control signal c. Also, in the data line drivers 3 of the display areas 1A and 1B a switching control circuit 7 controls the switches 4, 5 and 6 based on this control signal c.

Note that, although the number of pixels shown in the drawing is small, the actual number of pixels of each of the display areas 1A and 1B is, for example, 1920 x 1080 (length × height), respectively. Further, although it is here illustrated that writing is performed with respect to adjacent eight pixels as a unit, in actuality writing is performed with respect to adjacent twenty four pixels as a unit (corresponding thereto, 1920/24 = 80 switches are provided in the data line driver 3). In addition, a refresh rate of this liquid crystal display device is 120Hz. Therefore, the writing time to each pixel becomes considerably short: 24 x 2/ [(1920+) x 2 × (1080+) x 120] = approximately 80ns, even if the adjacent twenty four pixels are set to a unit. ( and are the share of the signal used for the circuit control.)

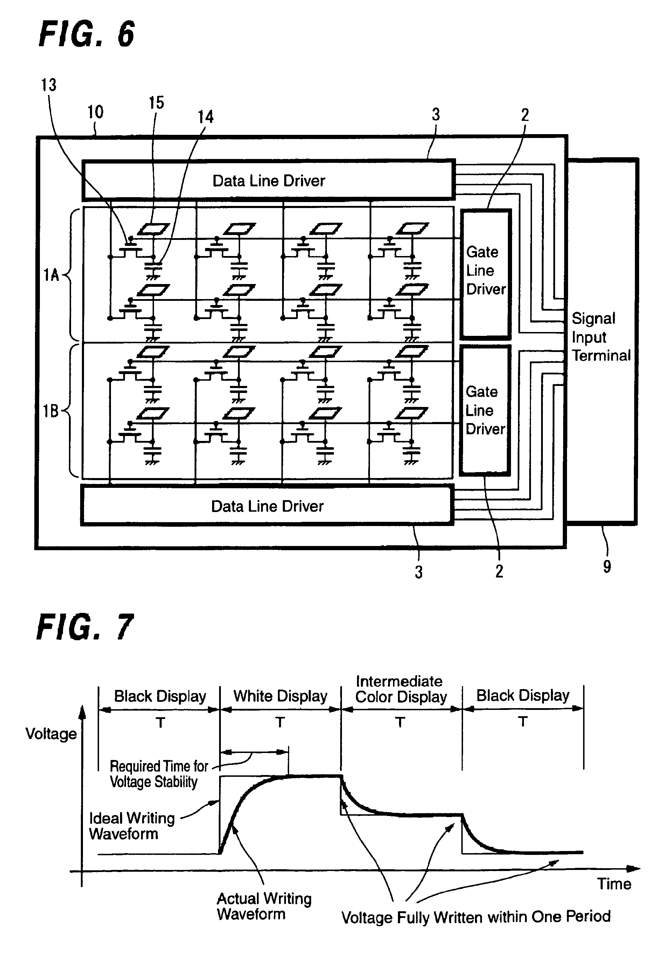

FIG. 6 is an equivalent circuit with respect to part of pixels of this liquid crystal display device. A single-crystal silicon transistor 13 is connected to each intersection of the gate line X and data line Y as a switching element, and when the gate line X is scanned, this single-crystal silicon transistor 13 is turned on. Then when the display data d is supplied to the data line Y, an auxiliary capacitance 14 is charged through the single-crystal silicon transistor 13, and the voltage is applied to a liquid crystal 15.

Next, the drive operation of this liquid crystal display device is explained. The display data d for the display area 1A, which is input from the signal processing circuit 11, is output in sequence, to the data for the eight pixels on the right side of the lowest row of the display area 1A, the data for the eight pixels in the center of the lowest row of the display area 1A, the data for the eight pixels on the left side of the lowest row of the display area 1A, the data for the eight pixels on the right side of the second row from the bottom of the display area 1A ..... the data for the eight pixels on the left side of the highest row of the display area 1A.

Also, the display data d for the display area 1B is output in sequence, to the data for the eight pixels on the right side of the highest row of the display area 1B, the data for the eight pixels in the center of the highest row of the display area 1B, the data for the eight pixels on the left side of the highest row of the display area 1B, the data for the eight pixels on the right side of the second row from the top of the display area 1B ...... the data for the eight pixels on the left side of the lowest row of the display area 1B.

Corresponding to that, as shown with arrows in FIG. 5, with respect to the direction of the dot sequential drive of this liquid crystal display device, in the display area 1A the scanning of the gate line X is carried out in the direction from the lower end to the upper end and the switching of the data line Y is carried out in the direction from the right end to the left end. Further, in display area 1B the scanning of the gate line X is carried out in the direction from the upper end to the lower end and the switching of the data line Y is carried out in the direction from the right end to the left end.

Then, first, the gate line X of the lowest row is scanned by the gate line driver 2 of the display area 1A and only the switch 6 is turned on by the switching control circuit 7 in the data line driver 3 of the display area 1A, so that the display data d is simultaneously supplied to the eight data lines Y on the right side of the display area 1A.

Further, at the same timing as that, the gate line X of the highest row is scanned by the gate line driver 2 of the display area 1B and only the switch 6 is turned on in the switching control circuit 7 in the data line driver 3 of the display area 1B, so that the display data d is simultaneously supplied to the eight data lines Y on the right side of the display area 1B.

Next, in the display area 1A, with the gate line of the lowest row being scanned, only the switch 5 is turned on in the switching control circuit 7 of the data line driver 3, so that the display data d is simultaneously supplied to the eight data lines Y in the center.

Further, at the same timing as that, in the display area 1B, with the gate line of the highest column being scanned, only the switch 5 is turned on in the switching control circuit 7 of the data line driver 3, so that the display data d is simultaneously supplied to the eight data lines Y in the center.

Next, in the display area 1A, with the gate line of the lowest row being scanned, only the switch 4 is turned on in the switching control circuit 7 of the data line driver 3, so that the display data d is simultaneously supplied to the eight data lines Y on the left side.

Further, at the same timing as that, in the display area 1B with the gate line of the highest column being scanned, only the switch 4 is turned on in the switching control circuit 7 of the data line driver 3, so that the display data d is simultaneously supplied to the eight data lines Y on the left side.

Hence, the writing operation to the pixels of the lowest row of the display area 1A and to the pixels of the highest row of the display area 1B (the pixels next to each other with the division boundary line of the display areas 1A and 1B positioned in between) is performed at the same timing.

The writing to the pixel of the lowest row of the display area 1A and to the pixel of the highest row of the display area 1B are completed, then next, while the gate line X of the second row from the bottom is scanned by the gate line driver 2 of the display area 1A, the gate line X of the second row from the top is scanned by the gate line driver 2 of the display area 1B in the same timing, and the writing is performed in the same order.

Subsequently, in the display area 1A the gate line X to be scanned changes by one line in the upward direction, and in the display area 1B the gate line X to be scanned changes by one line at the same timing in the downward direction, and the writing is repeated in the same order.

Note that, from the signal processing circuit 11 the display data of the same polarity is supplied to the pixels on adjacent gate lines. In other words, a line reversal drive is not performed in this liquid crystal display device. Therefore, the voltage of the same polarity is supplied to and written in the pixels next to each other with the division boundary line of the display areas 1A and 1B positioned in between.

In this liquid crystal display device, the display area is divided into two areas 1A and 1B driven independently from each other, and the wiring layout of the signal lines 8A and 8B which transfer display data to respective areas 1A and 1B is symmetrical with the division boundary line of those display areas 1A and 1B positioned in between.

Hence, the wiring layout of the signal lines 8A and 8B, in which the display data are transferred to respective divided display areas 1A and 1B, is made symmetrical with a division boundary line positioned in between, so that the wiring resistance and parasitic capacitance of those signal lines 8A and 8B become equal to each other and therefore the delay time of the display data in those signal lines 8A and 8B becomes equal (no difference in delay time occurs).

Further, in this liquid crystal display device the timing control circuit 12 makes a control to perform writing of the data to the pixels next to each other with the division boundary line positioned in between at the same timing. Therefore, the voltage is written into the pixels next to each other with the division boundary line positioned in between, in the timing only equally delayed in the signal lines 8A and 8B from the timing by this timing control circuit 12 (approximately the same timing in view of the scale of 80ns which is the writing time to each pixel).

With this, since no difference in intensity and so on are generated in the pixels next to each other with the division boundary line positioned in between, the division boundary line becomes invisible as a joint, and the picture quality improves.

Furthermore, in this liquid crystal display device, as is obvious in comparison with the liquid crystal display device shown in FIG. 2, the length of the signal lines 8A and 8B becomes short (the display data output from the signal processing circuit 11 is transferred to the display areas 1A and 1B in almost shortest distance on the drive circuit board 10).

Therefore, since the wiring resistance and parasitic capacitance of the signal lines 8A and 8B become small, the delay time of the display data d in the signal lines 8A and 8B becomes short. For example, if the delay time in the signal line 57A of FIG. 2 is approximately 100ns, the delay time in the signal lines 8A and 8B will become approximately 40ns or less.

FIG. 7 is a diagram which shows an example of the writing waveform to the pixel with delay in the signal lines 8A and 8B comparing with the ideal writing waveform, and each T is the writing time (for example, approximately 80ns) to a pixel. As is clear in comparison with a writing waveform shown in FIG. 4, since the degree of bluntness of an analog waveform becomes small by making the delay time short, the presumed voltage can be written within the writing time.

Moreover, since the delay time becomes short to make the degree of bluntness of an analog waveform small, the time required for stabilizing a writing voltage becomes short, so that no influence of the waveform written into the pixel in the prior stage remains. Accordingly, no ghost occurs on a display screen.

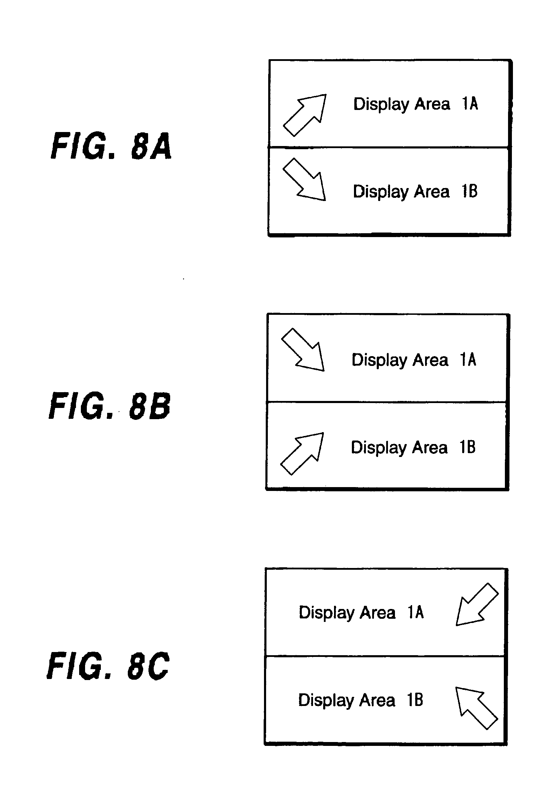

In addition, the direction of the dot sequential drive of this liquid crystal display device may be the directions as shown with arrows in FIGS. 8A to 8C other than the direction shown with arrows in FIG. 5. In those cases, if the timing of performing a scan of the gate line X of the lowest row of the display area 1A, and the timing of performing a scan of the gate line X of the highest row of the display area 1B are made equal, the data writing operation to the pixels next to each other with the division boundary line positioned in between is performed in the same timing.

### [Embodiment 2]

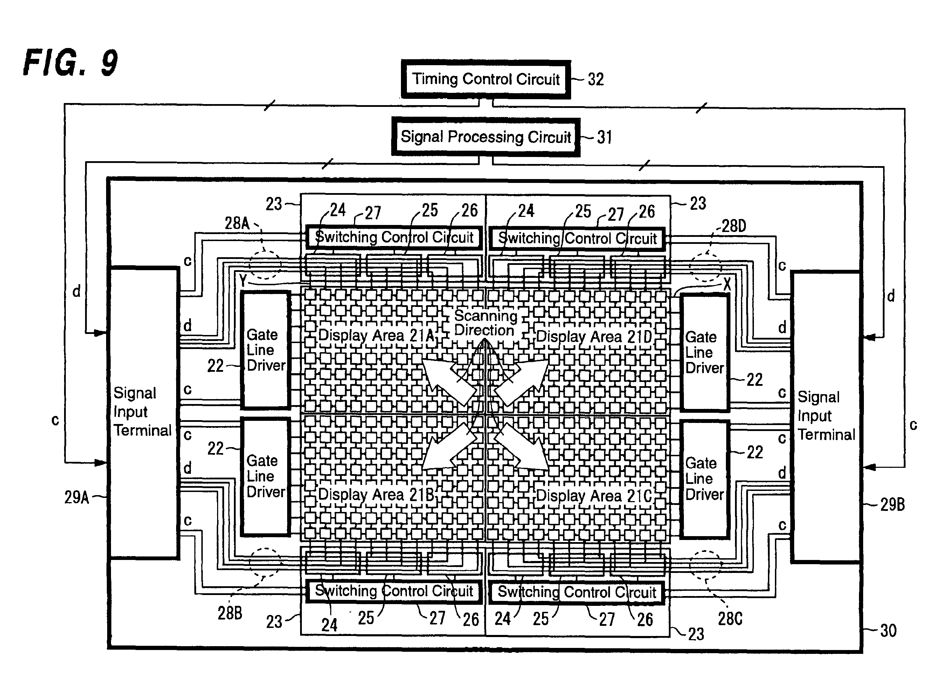

Next, FIG. 9 shows another example of a configuration of a liquid crystal display device of the dot sequential drive method to which the present invention is applied. this liquid crystal display device is a reflective liquid crystal display device in which the liquid crystal is injected between a glass substrate in which the transparent electrode is formed, and a drive circuit board (for example, a silicon substrate), and a configuration on the side of the drive circuit board is shown in the drawing. On this drive circuit board 30, a display area is divided into two of the top and bottom in the column direction (vertical direction in the drawing), and also divided into the right and left areas in the row direction (horizontal direction in the drawing), so that the display area is divided into four areas 21A to 21D.

The gate lines X in the row direction (horizontal direction in the drawing) and the data lines Y in the column direction are arranged in each of areas 21A to 21D in the shape of matrix, respectively. A pixel electrode (a metal mainly composed of aluminum, for example) which applies the voltage and reflects light to a liquid crystal, a single-crystal silicon transistor as a switching element and an auxiliary capacitance are arranged at each intersection of the gate line X and data line Y.

A gate line driver 22 and a data line driver 23 are provided for each of the display areas 21A to 21D, respectively.

A signal processing circuit 31 is a circuit which performs processing of the serial-parallel conversion, gamma correction, amplification and so on and which outputs the display data d for the display area 21A (for the upper left of screen), the display data d for the display area 21B (for the lower left of screen), the display data d for the display area 21C (for the lower right of screen) and the display data d for the display area 21D (for the upper right of screen). Those display data d are the data of four phases for writing into the four pixels next to each other, respectively at the same time.

A timing control circuit 32 is a circuit which outputs the control signal c to a gate line driver 22 and data line driver 23 based on a synchronous signal input from the outside.

Signal input terminals 29A and 29B are provided at the right and left side of the display areas 21A to 21D in the drive circuit board 30, respectively. To the signal input terminal 29A, the display data d for the display areas 21A and 21B is input from the signal processing circuit 31, and the control signal c for the display areas 21A and 21B is input from the timing control circuit 32.

To the signal input terminal 29B, the display data d for the display areas 21C and 21D is input from the signal processing circuit 31, and the control signal c for the display areas 21C and 21D is input from the timing control circuit 32.

The display data d for the display area 21A, which is input to the signal input terminal 29A from the signal processing circuit 31 is transferred to switches 24, 25 and 26 in the data line driver 23 of the display area 21A by four signal lines 28A.

The display data d for the display area 21B which is input to the signal input terminal 29A from the signal processing circuit 31 is transferred to the switches 24, 25 and 26 in the data line driver 23 of the display area 21B by four signal lines 28B.

Further, the display data d for the display area 21C which is input to the signal input terminal 29B from the signal processing circuit 31 is transferred to the switches 24, 25 and 26 in the data line driver 23 of the display area 21C by four signal lines 28C.

Furthermore, the display data d for the display area 21D which is input to the signal input terminal 29B from the signal processing circuit 31 is transferred to the switches 24, 25 and 26 in the data line driver 23 of the display area 21D by four signal lines 28D.

With respect to those signal lines 28A to 28D, the wiring layout thereof is symmetrical with a division boundary line of display areas 21A to 21D (the cross line formed with a line in horizontal direction and a line in the vertical direction intersected) positioned in between, as shown in the drawing.

The control signal c for the display areas 21A and 21B input into the signal input terminal 29A from the timing control circuit 32 is supplied to the gate line driver 22 and the data line driver 23 of respective display areas 21A and 21B.

Further, the control signal c for the display areas 21C and 21D input into the signal input terminal 29B from the timing control circuit 32 is supplied to the gate line driver 22 and the data line driver 23 of respective display areas 21C and 21D.

The gate line drivers 22 of the display areas 21A to 21D scan the gates line X based on this control signal c. Further, a switching control circuit 27 controls the switches 24, 25 and 26 based on this control signal c in the data line drivers 23 of the display areas 21A to 21D, respectively.

Note that, although the number of pixels shown in the drawing is small, the actual number of pixels of each of display areas 21A to 21D is, for example, 1920 x 1080 (length x height), respectively. Further, although it is here illustrated that writing is performed with respect to adjacent eight pixels as a unit, in actuality writing is performed with respect to adjacent twenty four pixels as a unit (corresponding thereto, 1920/24 = 80 switches are provided in the data line driver 3). In addition, a refresh rate of this liquid crystal display device is 120Hz. Therefore, the writing time to each pixel becomes considerably short: 24 x 2 x 2/ [(1920+) x 2 × (1080+) x 2 × 120] = approximately 80ns, even if the adjacent twenty four pixels are set to a unit. ( and are the share of the signal used for the circuit control.)

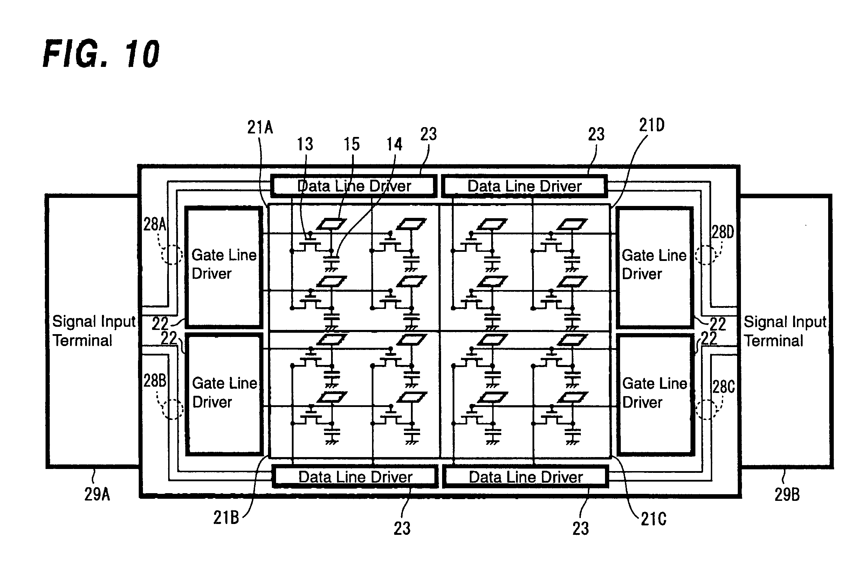

FIG. 10 is an equivalent circuit with respect to part of pixels of this liquid crystal display device and the same reference numerals are given to the portions in common in FIG. 6. A single-crystal silicon transistor 13 is connected to each intersection of the gate line X and data line Y as a switching element, and when the gate line X is scanned, this single-crystal silicon transistor 13 is turned on. Then when the display data d is supplied to the data line Y, an auxiliary capacitance 14 is charged through the single-crystal silicon transistor 13, and the voltage is applied to a liquid crystal 15.

Next, the drive operation of this liquid crystal display device is explained. The display data d for the display area 21A, which is input from the signal processing circuit 31, is output in sequence, to the data for the four pixels on the right side of the lowest row of the display area 21A, the data for the four pixels in the center of the lowest row of the display area 21A, the data for the four pixels on the left side of the lowest row of the display area 21A, the data for the four pixels on the right side of the second row from the bottom of the display area 21A ...... the data for the four pixels on the left side of the highest row of the display area 21A.

Also, the display data d for the display area 21B is output in sequence, to the data for the four pixels on the right side of the highest row of the display area 21B, the data for the four pixels in the center of the highest row of the display area 21B, the data for the four pixels on the left side of the highest row of the display area 21B, the data for the four pixels on the right side of the second row from the top of the display area 21B ...... the data for the four pixels on the left side of the lowest row of the display area 21B.

Also, the display data d for the display area 21C is output in sequence, to the data for the four pixels on the left side of the highest row of the display area 21C, the data for the four pixels in the center of the highest row of the display area 21C, the data for the four pixels on the right side of the highest row of the display area 21C, the data for the four pixels on the left side of the second row from the top of the display area 21C ...... the data for the four pixels on the right side of the lowest row of the display area 21C.

Also, the display data d for the display area 21D is output in sequence, to the data for the four pixels on the left side of the lowest row of the display area 21D, the data for the four pixels in the center of the lowest row of the display area 21D, the data for the four pixels on the right side of the lowest row of the display area 21D, the data for the four pixels on the left side of the second row from the bottom of the display area 21D ...... the data for the four pixels on the right side of the highest row of the display area 21D.

Corresponding to that, as shown with arrows in FIG. 9, with respect to the direction of the dot sequential drive of this liquid crystal display device, in the display area 21A the scanning of the gate line X is carried out in the direction from the lower end to the upper end and the switching of the data line Y is carried out in the direction from the right end to the left end. Further, in display area 21B the scanning of the gate line X is carried out in the direction from the upper end to the lower end and the switching of the data line Y is carried out in the direction from the right end to the left end.

Further, in the display area 21C the scanning of the gate line X is carried out in the direction from the upper end to the lower end and the switching of the data line Y is carried out in the direction from the left end to the right end. Furthermore, in display area 21D the scanning of the gate line X is carried out in the direction from the lower end to the upper end and the switching of the data line Y is carried out in the direction from the left end to the right end.

Then, first, the gate line X of the lowest row is scanned by the gate line driver 22 of the display area 21A and only the switch 26 is turned on by the switching control circuit 27 in the data line driver 23 of the display area 21A, so that the display data d is simultaneously supplied to the four data lines Y on the right side of the display area 21A.

Further, at the same timing as that, the gate line X of the highest row is scanned by the gate line driver 22 of display area 21B and only the switch 26 is turned on in the switching control circuit 27 in the data line driver 23 of the display area 21B, so that the display data d is simultaneously supplied to the four data lines Y on the right side of the display area 21B.

Further, at the same timing as that, the gate line X of the highest row is scanned by the gate line driver 22 of the display area 21C and only the switch 24 is turned on in the switching control circuit 27 in the data line driver 23 of the display area 21C, so that the display data d is simultaneously supplied to the four data lines Y on the left side of the display area 21C.

Further, at the same timing as that, the gate line X of the lowest row is scanned by the gate line driver 22 of display area 21D and only the switch 24 is turned on in the switching control circuit 27 in the data line driver 23 of the display area 21D, so that the display data d is simultaneously supplied to the four data lines Y on the left side of the display area 21D.

Next, in the display area 21A, with the gate line of the lowest row being scanned, only the switch 25 is turned on in the switching control circuit 27 of the data line driver 23, so that the display data d is simultaneously supplied to the four data lines Y in the center.

Further, at the same timing as that, in the display area 21B, with the gate line of the highest column being scanned, only the switch 25 is turned on in the switching control circuit 27 of the data line driver 23, so that the display data d is simultaneously supplied to the four data lines Y in the center.

Further, at the same timing as that, in the display area 21C, with the gate line of the highest column being scanned, only the switch 25 is turned on in the switching control circuit 27 of the data line driver 23, so that the display data d is simultaneously supplied to the four data lines Y in the center.

Further, at the same timing as that, in the display area 21D, with the gate line of the lowest column being scanned, only the switch 25 is turned on in the switching control circuit 27 of the data line driver 23, so that the display data d is simultaneously supplied to the four data lines Y in the center.

Next, in the display area 21A, with the gate line of the lowest row being scanned, only the switch 24 is turned on in the switching control circuit 27 of the data line driver 23, so that the display data d is simultaneously supplied to the four data lines Y on the left side.

Further, at the same timing as that, in the display area 21B with the gate line of the highest column being scanned, only the switch 24 is turned on in the switching control circuit 27 of the data line driver 23, so that the display data d is simultaneously supplied to the four data lines Y on the left side.

Further, at the same timing as that, in the display area 21C with the gate line of the highest column being scanned, only the switch 26 is turned on in the switching control circuit 27 of the data line driver 23, so that the display data d is simultaneously supplied to the four data lines Y on the right side.

Further, at the same timing as that, in the display area 21D with the gate line of the highest column being scanned, only the switch 26 is turned on in the switching control circuit 27 of the data line driver 23, so that the display data d is simultaneously supplied to the four data lines Y on the right side.

Hence, the writing operation to the pixels of the lowest row of the display areas 21A and 21D, and to the pixels of the highest row of the display areas 21B and 21C (the pixels next to each other with the horizontal division boundary line between display areas 21A and 21D, and display areas 21B and 21C positioned in between) is performed at the same timing.

The writing to the pixels of the lowest row of the display areas 21A and 21D, and to the pixels of the highest row of the display areas 21B and 21D are completed, then next, while the gate line X of the second row from the bottom is scanned by the gate line driver 22 of the display areas 21A and 21D, the gate line X of the second row from the top is scanned by the gate line driver 22 of the display areas 21B and 21C in the same timing, and the writing is performed in the same order.

Subsequently, in the display areas 21A and 21D the gate line X to be scanned changes by one line in the upward direction, and in the display areas 21B and 21C the gate line X to be scanned changes by one line at the same timing in the downward direction, and the writing is repeated in the same order.

Accordingly, the operation of writing to the pixels next to each other with the division boundary line in the vertical direction between the display areas 21A and 21B, and the display areas 21C and 21D positioned in between, is also performed in the same timing.

Note that, from the signal processing circuit 31 the display data of the same polarity is supplied to the pixels on adjacent gate lines. In other words, a line reversal drive is not performed in this liquid crystal display device. Therefore, the voltage of the same polarity is supplied to and written in the pixels next to each other with the division boundary line between display areas 21A and 21D, and display areas 21B and 21C positioned in between.

In this liquid crystal display device, the display area is divided into four areas 21A to 21D driven independently from each other, and the wiring layout of the signal lines 28A to 28D which transfer the display data to respective areas 21A to 21D is symmetrical with the division boundary line of those areas 21A to 21D positioned in between.

Hence, the wiring layout of the signal lines 28A to 28D, in which the display data are transferred to each of divided display areas 21A to 21D, is made symmetrical with a division boundary line positioned in between, so that the wiring resistance and parasitic capacitance of those signal lines 28A to 28D become equal to each other and therefore the delay time of the display data in those signal lines 28A to 28D becomes equal (no difference in delay time occurs).

Further, in this liquid crystal display device the timing control circuit 32 makes a control to perform writing of the data to the pixels next to each other with a division boundary line positioned in between at the same timing. Therefore, the voltage is written into the pixels next to each other with the division boundary line positioned in between, in the timing only equally delayed in the signal lines 28A to 28D from the timing by this timing control circuit 32 (approximately the same timing in view of the scale of 80ns which is the writing time to each pixel).

With this, since no difference in intensity and so on are generated in the pixels next to each other with the division boundary line positioned in between, the division boundary line becomes invisible as a joint, and the picture quality improves.

Furthermore, in this liquid crystal display device, as is obvious in comparison with the liquid crystal display device shown in FIG. 2, the length of the signal lines 28A to 28D becomes short (the display data output from the signal processing circuit 31 is transferred to the display areas 21A to 21D in almost shortest distance on the drive circuit board 30).

Therefore, since the wiring resistance and parasitic capacitance of the signal lines 28A to 28D become small, the delay time of the display data d in the signal lines 28A to 28D becomes short. For example, if the delay time in the signal line 57A of FIG. 2 is approximately 100ns, the delay time in the signal lines 28A to 28D will become approximately 40ns or less.

Accordingly, similarly to the explanation with respect to [Embodiment 1] of FIG. 7, the presumed voltage can be written within the writing time, and no ghost occurs on a display screen.

Furthermore, since the length of the gate line X of respective display areas 21A to 21D becomes half by dividing a display area into two not only in the column direction but also in the row direction, the wiring resistance and parasitic capacitance of the gate line X can also be made small. Accordingly, since the delay of the scanning timing caused by the wiring resistance and parasitic capacitance of the gate line X (the delay of the timing of each switching element of pixels on the gate line X turned on) can be decreased, the deterioration of the picture quality caused by this delay of scanning timing can also be prevented.

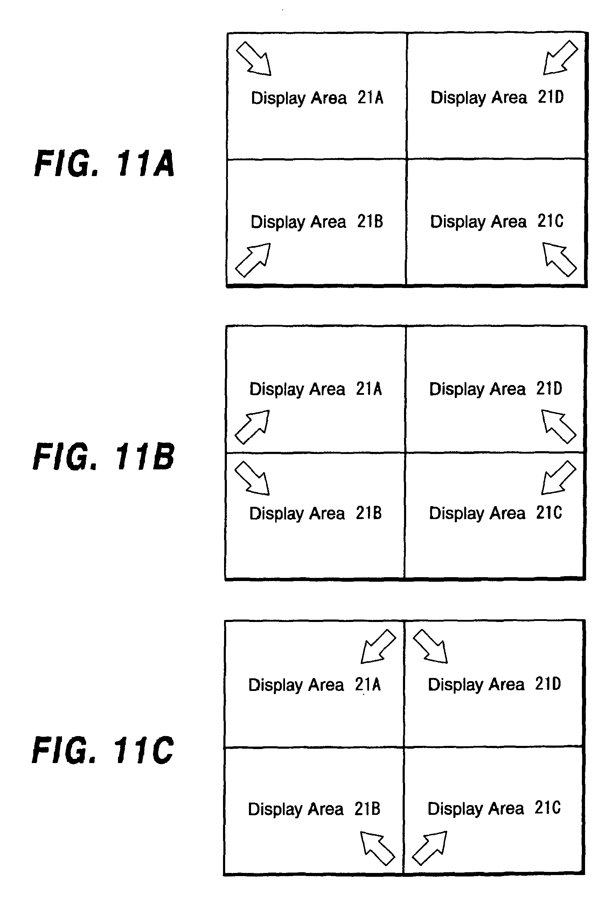

In addition, the direction of the dot sequential drive of this liquid crystal display device may be the directions as shown with arrows in FIGS. 11A to 11C other than the direction shown with arrows in FIG. 9. In those cases, if the timing of performing a scan of the gate line X of the i-th row (i= 1, 2, 3...) from the top of the display areas 21A and 21D, and the timing of performing a scan of the gate line X of the i-th row (i= 1, 2, 3...) from the bottom of the display areas 21B and 21C are made equal, the data writing operation to the pixels next to each other with the division boundary line positioned in between is performed in the same timing.

### [Embodiment 3]

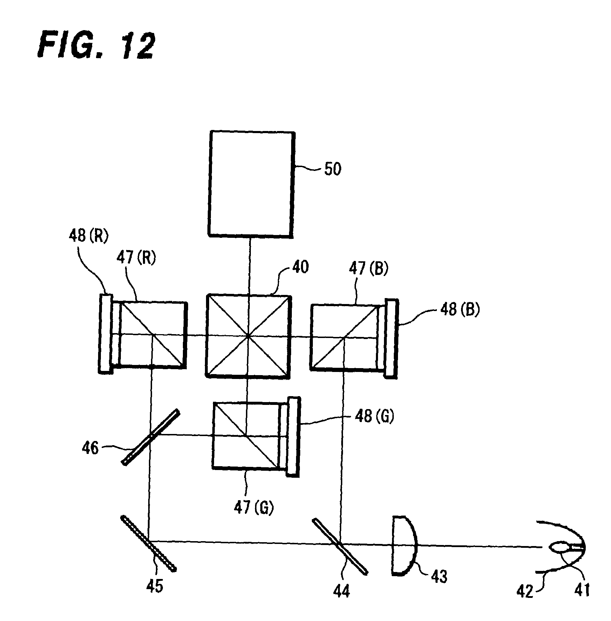

FIG. 12 shows an example of a configuration of a liquid crystal projector to which the present invention is applied. In this liquid crystal projector, light emitted from an electric discharge lamp 41 which is a light source is made into the parallel light by a reflector 42, and enters a dichroic mirror 44 which reflects blue light through a condenser 43. Red light and green light which have passed through the dichroic mirror 44 are reflected by a mirror 45, and enters a dichroic mirror 46 which reflects green light.

The red light which has passed through a dichroic mirror 46, the green light reflected by the dichroic mirror 46 and the blue light reflected by the dichroic mirror 44 are input to polarizing beam splitters 47(R), 47(G), and 47(B), respectively. Then, each specific linear polarized light of respective blue light, green light and red light (having either of P polarization or S polarization) is input to reflective liquid crystal display devices 48(R), 48(G) and 48(B) through the polarization beam splitters 47(R), 47(G) and 47(B).

As the liquid crystal display devices 48(R), 48(G) and 48(B), the liquid crystal display device of the configuration shown in [Embodiment 1] of FIG. 5 or the liquid crystal display device of the configuration shown in [Embodiment 2] of FIG. 9 is used.

R, G and B signals in the picture signals input into this liquid crystal projector from the outside are supplied to a signal processing circuit (a signal processing circuit 11 in the liquid crystal display device of FIG. 5 or a signal processing circuit 31 in the liquid crystal display device of FIG. 9) of liquid crystal display devices 48(R), 48(G) and 48(B), respectively. The light input to the liquid crystal display devices 48(R), 48(G) and 48(B) is modulated corresponding to the R, G and B signals, respectively.

The light of a specific linear polarization in the light reflected by the liquid crystal devices 48(R), 48(G) and 48(B) is composed in the dichroic prism 40 through each of the polarizing beam splitters 47(R), 48(G), and 48(B), and is projected from a projection lens 50 to the outside of the liquid crystal projector.

In this liquid crystal projector, since the liquid crystal display device shown in [Embodiment 1] or [Embodiment 2] is used as an optical modulation device, the division boundary line between respective display areas of an optical modulation device becomes invisible as a joint on a projection screen, and a high definition large screen display is attained.

In addition, in the above described [Embodiment 1] and [Embodiment 2], the present invention is applied to the reflective liquid crystal display device. However, not limiting thereto, the present invention may be applied to a transmissive liquid crystal display device. Furthermore, the present invention can also be applied to a display device of a matrix drive method other than a liquid crystal display device.

Moreover, the above described [Embodiment 3] shows the example in which the present invention is applied to the liquid crystal projector. However, the display device according to the present invention is not limited to the projector systems such as a liquid crystal projector, and can be used in various display apparatuses such as a television receiver set, a monitor of a personal computer, a head mount display, a view finder of a video camera and digital camera, and a display for a cellular phone unit and the information terminal equipment.

Having described preferred embodiments of the invention with reference to the accompanying drawings, it is to be understood that the invention is not limited to those precise embodiments and that various changes and modifications could be effected therein by one skilled in the art without departing from the spirit or scope of the invention as defined in the appended claims.

## Claims

1. A display device of a matrix drive method in which gate lines in the row direction and data lines in the column direction are arranged in matrix shape and a pixel is arranged at the intersection of said gate line and said data line, comprising:
a display area divided into two or more areas driven independently from each other,
signal lines that transfer display data to each of said display areas, whose wiring layout is approximately symmetrical at least with a division boundary line of said display areas positioned in between, and
control portion which makes a control to perform writing of the display data at least to the pixels next to each other with said division boundary line positioned in between at approximately the same timing.

2. The display device according to claim 1, wherein
the display area is divided into two areas in said column direction.

3. The display device according to claim 1, wherein
the display area is divided into two in said column direction and is divided into two in said row direction to be divided into four areas.

4. The display device according to claim 1, further comprising:
signal processing portion which supplies display data of the same polarity to the pixels next to each other with said division boundary line positioned in between.

5. The display device according to claim 1, wherein
a single-crystal silicon transistor is used as a switching element to constitute a liquid crystal display device of an active matrix drive method.

6. A projection type display apparatus in which an optical modulation device is irradiated with light emitted from a light source and which projects the light modulated by said optical modulation device in accordance with display data;
said optical modulation device in which gate lines in the row direction and data lines in the column direction are arranged in matrix shape and a pixel is arranged at the intersection of the gate line and the data line to constitute the display device of a matrix drive method, comprising:
a display area divided into two or more areas driven independently from each other,
signal lines that transfer display data to each of said display areas, whose wiring layout is approximately symmetrical at least with a division boundary line of said display areas positioned in between, and
control portion which makes a control to perform writing of the display data at least to the pixels next to each other with said division boundary line positioned in between at approximately the same timing.

7. The projection type display apparatus according to claim 6, wherein
said optical modulation device is a liquid crystal display device of an active matrix drive method, in which a single-crystal silicon transistor is used as a switching element.
